# EUROPÄISCHE PATENTSCHRIFT

(11) **EP 3 388 639 B1**
(45) Veröffentlichungstag und Bekanntmachung des Hinweises auf die Patenterteilung: **01.05.2024**
(21) Anmeldenummer: 18163384.3
(22) Anmeldetag: 22.03.2018
(51) Int. Cl.: F01D 17/08, G01L 19/00, G01M 3/26, F01D 21/00, G01F 1/46

(54) **MESSVORRICHTUNG UND MESSVERFAHREN FÜR EINE STRÖMUNG**
MEASURING DEVICE AND MEASURING METHOD FOR A FLOW
DISPOSITIF DE MESURE ET PROCÉDÉ DE MESURE D'UN ÉCOULEMENT

(30) Priorität: 31.03.2017 DE 102017205573
(43) Veröffentlichungstag der Anmeldung: 17.10.2018
(73) Patentinhaber: Rolls-Royce Deutschland Ltd & Co KG, 15827 Blankenfelde-Mahlow (DE)
(72) Erfinder: FREUND, Oliver, 15827 Blankenfelde-Mahlow (DE)
(74) Vertreter: Maikowski & Ninnemann Patentanwälte Partnerschaft mbB

(56) Entgegenhaltungen:
- EP-A1- 2 853 872
- EP-A2- 0 255 056
- WO-A1-81/01331
- DE-A1-102008 007 317
- GB-A- 2 483 931
- US-A- 4 733 975
- US-A1- 2006 288 703

## Beschreibung

Die Erfindung betrifft eine Turbomaschine mit einer Messvorrichtung für eine Strömung mit den Merkmalen des Anspruchs 1 und ein Messverfahren für eine Strömung in einer Turbomaschine mit den Merkmalen des Anspruchs 9.

Ein Charakteristikum reibungsbehafteter Strömungen ist die Ausbildung von sogenannten Grenzschichten. Dabei umfasst die Grenzschicht das im Vergleich zur Kernströmung impulsärmere Fluid, das aufgrund von Reibung (z.B. an Körpern in der Strömung), aber auch in Folge von Rotations- oder Zentrifugalkräften auftritt. Hierdurch ergeben sich insbesondere bei rotationsinduzierten Grenzschichten Umfangsvariationen mit sehr großer Amplitude, die eine genaue und schwankungsarme Charakterisierung der Kavitätsströmung erschweren oder unmöglich machen.

Technische Strömungen sind vielseitig und in den meisten Fällen sehr komplex. Effekte wie zum Beispiel Reibung, Rotations- und Corioliskräfte tragen dazu bei, dass Strömungen Geschwindigkeits-, Druck- und Temperaturgradienten aufweisen. Gerade in Strömungsmaschinen (z.B. einem Flugzeugtriebwerk), in denen hohe Drücke und hohe Rotationsgeschwindigkeiten auftreten, beinhalten Strömungen eine komplexe dreidimensionale Struktur. Ein typischer Fall ist die Labyrinthdichtung zwischen einer Leitschaufel und einer Laufschaufel in einem Flugzeugtriebwerk, die zur Abdichtung von Kavitäten in der Turbine eingesetzt wird. Eine intakte Abdichtung ist dabei essentiell für die Begrenzung der Temperaturbelastung, der die Turbinenscheiben ausgesetzt sind. Zur Überwachung der Dichtfunktion der Labyrinthdichtung wird daher häufig die Lufttemperatur in diesem Bereich gemessen. Im Betrieb bilden sich jedoch auf Grund von Grenzschichteffekten in Umfangsrichtung unterschiedliche Temperaturen aus, was die Anordnung einer Vielzahl von Sensoren erforderlich macht.

Bei bekannten Strömungsmessvorrichtungen (z.B. in der US 5 157 914 A, der US 2014 / 0133963 A1 oder der US 2014 / 0037430 A1) erfolgt ein Absaugen des Fluides aus der Strömung wandbündig, so dass Grenzschichteinflüsse die Messungen beeinflussen und somit eine große Umfangsschwankung zu erwarten ist.

Eine weitere Strömungsmessvorrichtung ist in der WO 81/013317 A1 beschrieben.

In vielen Fällen ist es somit wünschenswert, den ausgemischten Zustand eines Fluides in einer Strömung zu charakterisieren, d.h. eine von Grenzschichteffekten unbeeinflusste Messung durchführen zu können.

Die Aufgabe wird durch eine Turbomaschine mit einer Strömungsmessvorrichtung mit den Merkmalen des Anspruchs 1 gelöst.

Die Turbomaschine, insbesondere ein Flugtriebwerk weist mindestens eine Messvorrichtung, die zwischen einer Leitschaufel und einer Laufschaufel der Turbomaschine angeordnet ist auf, wobei die Messvorrichtung mindestens eine Einsaugöffnung für Fluid aus einem Bereich einer ausgemischten, von Grenzschichteffekten unbeeinflussten Strömung aufweist wobei die mindestens eine Einsaugöffnung von einer die Strömung begrenzenden Wandung beabstandet ist und über einen Fluidkanal eingesaugtes Fluid zu einer Sensorvorrichtung führbar ist, wobei der Fluidkanal so ausgebildet ist, dass die mindestens eine Einsaugöffnung parallel oder unter einem Winkel zu einer Hauptströmungsrichtung angeordnet ist oder dass der Fluidkanal einen Abschnitt aufweist, der von dem Fluid einfach durchströmbar ist, wobei aus diesem Abschnitt Fluid zu der Sensorvorrichtung abzweigbar ist, und wobei der Fluidkanal so ausgebildet ist, dass eingesaugtes Fluid aufstauungsfrei, d.h. ohne Messung eines Staudrucks im Inneren des Fluidkanals zu einer Sensorvorrichtung führbar ist, und die Sensorvorrichtung als Temperatursensor, als Sensor zur Messung der Konzentration mindestens einer Substanz, als Sensor zur Bestimmung der Partikelgröße einer partikelbehafteten Strömung, als Sensor zur Bestimmung der Luftfeuchte und / oder als Sensor zur Bestimmung des Ölanteils in einem Gas ausgebildet ist.

Damit kann eine konsistente, sehr genaue und schwankungsarme Charakterisierung der Kernströmung durchgeführt werden. Grenzschichteffekte, die insbesondere bei rotationsbedingten Grenzschichten eine Umfangsvariation mit großer Amplitude nach sich ziehen, können hierdurch minimiert werden.

In einer Ausführungsform kann der Querschnitt der mindestens einen Einsaugöffnung rund oder elliptisch ausgebildet sein.

In einer Ausführungsform kann mindestens eine weitere Einsaugöffnung am Umfang des Fluidkanals angeordnet sein. In einer besonderen Ausführungsform können dann insbesondere zwei Einsaugöffnungen unter einem Abstand zwischen 90° und 120° angeordnet sein.

Zur Minimierung des Einflusses der Grenzschicht kann das Verhältnis zwischen der freien Länge des Fluidkanals in der Strömung und dem charakteristischen Durchmesser des Fluidkanals zwischen 0,5 und 1,5 liegen, insbesondere bei 1.

Auch ist es möglich, dass die freie Länge des Fluidkanals in der Strömung 2 bis 10 mal der sich im Betrieb ausbildenden Grenzschichtdicke entspricht. Damit sollen die Grenzschichteinflüsse auf das Messergebnis minimiert werden.

Je nach Strömungsverhältnissen kann die mindestens eine Einsaugöffnung unter einem Winkel zwischen 70° und 110°, insbesondere zwischen 85° und 105°, ganz insbesondere unter einem Winkel von 90° zur Hauptströmungsrichtung angeordnet sein.

In einer weiteren Ausführungsform liegt im Betrieb die Druckdifferenz zwischen der ausgemischten Strömung und der Sensorvorrichtung zwischen 1,2 und 1,5, insbesondere bei 1,4. Damit ist eine ausreichende Durchströmung sichergestellt.

Insbesondere kann die mindestens eine Messvorrichtung in einem Luftleitsystem und / oder einem Heißgaspfad des Kompressors und / oder der Turbine angeordnet sein.

Die Aufgabe wird auch durch ein Messverfahren für eine Strömung in einer Turbomaschine, insbesondere in einem Flugzeugtriebwerk, mit den Merkmalen des Anspruchs 11 gelöst.

In Zusammenhang mit den in den Figuren dargestellten Ausführungsbeispielen wird die Erfindung erläutert. Dabei zeigt
Fig. 1 eine schematische Zeichnung eines Beispiels einer Messvorrichtung;
Fig. 2 eine schematische Schnittansicht eines weiteren Beispiels der Messvorrichtung;
Fig. 3A eine Schnittansicht eines weiteren Beispiels der Messvorrichtung;
Fig. 3B eine perspektivische Darstellung des Beispiels nach Fig. 3A;
Fig. 4A eine Schnittansicht einer Ausführungsform der Messvorrichtung;
Fig. 4B eine perspektivische Darstellung der Ausführungsform nach Fig. 4A;
Fig. 5A eine Schnittansicht einer weiteren Ausführungsform der Messvorrichtung;
Fig. 5B eine perspektivische Darstellung der Ausführungsform nach Fig. 5A;
Fig. 6 eine perspektivische Anordnung einer Ausführungsform im Bereich einer Leitschaufel.

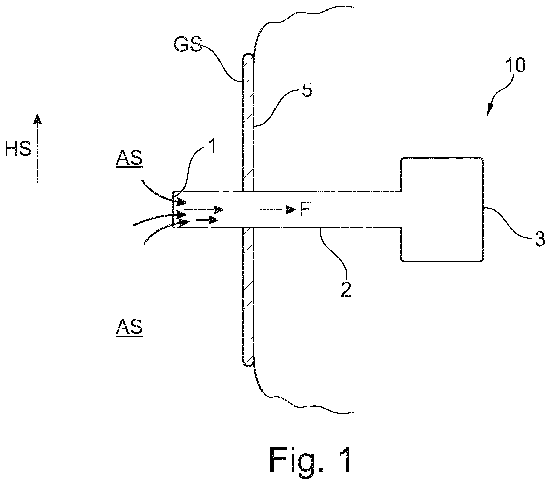

Die in den Figuren 1, 2, 3A und 3B gezeigten Beispiele dienen lediglich der Erläuterung und zeigen keine erfindungsgemäßen Ausführungsbeispiele.

Die Charakterisierung des Fluides in komplexen Strömungen ist aus vielerlei Hinsicht relevant für das Verständnis und die Verbesserung von modernen Strömungsmaschinen. In Fig. 1 ist eine Messvorrichtung 10 für eine Strömung in einer Turbomaschine, insbesondere in einem Flugzeugtriebwerk dargestellt, mit der Effekte einer Grenzschicht GS auf das Messergebnis minierbar sind.

Die Grenzschicht GS bildet sich hier im Betrieb unmittelbar an einer Wandung 5 aus. Eine typische Grenzschichtdicke einer Strömung in einem Flugzeugtriebwerk liegt im Bereich von 0.5 mm.

Im Kern der Strömung - die Hauptströmungsrichtung HS ist in Fig. 1 eingezeichnet - bildet sich ein Bereich der ausgemischten Strömung AS aus.

In dem hier dargestellten Beispiel dient eine Einsaugöffnung 1 dem Einsaugen von Fluid aus dem Bereich der ausgemischten Strömung AS, wobei die mindestens eine Einsaugöffnung 1 von der die Strömung begrenzenden Wandung 5 beabstandet ist und über einen Fluidkanal 2 eingesaugtes Fluid - ohne Aufstauung im Inneren des Fluidkanals 2 - zu einer Sensorvorrichtung 3 (z.B. einer Temperaturmessvorrichtung) geführt ist. Aufstaufrei bedeutet hier, dass im Fluidkanal 2 kein Staudruck gemessen wird.

Somit ragt der Fluidkanal 2 mit der Einsaugöffnung 1 an der Spitze als eine Art Schnorchel in die Strömung hinein. Durch den Abstand der Einsaugöffnung 1 von der Grenzschicht GS werden Grenzschichteffekte bei der Messung minimiert. Das Verhältnis zwischen der freien Länge (d.h. der Beabstandung B der Einsaugöffnung 1 von der Wandung 5) des Fluidkanals 2 in der Strömung und dem charakteristischen Durchmesser des Fluidkanals 2 kann zwischen 0,5 und 1,5 liegen, insbesondere bei 1. Diese freie Länge kann auch das 2- bis 10-fache der sich im Betrieb ausbildenden Grenzschicht betragen.

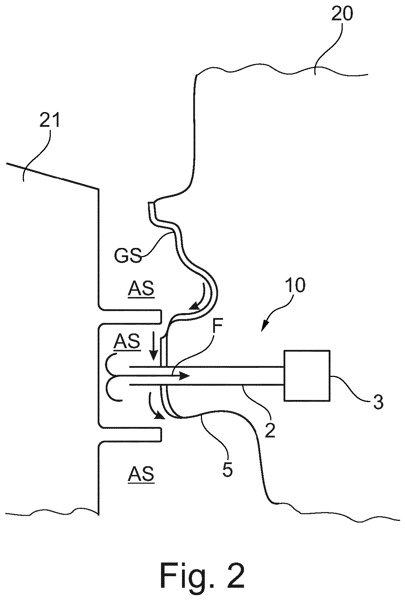

Ein konkretes Anwendungsbeispiel ist die Überwachung der Turbinenkühllufttemperatur, das in Fig. 2 schematisch dargestellt ist. Dabei ist der Zwischenraum zwischen einer Leitschaufel 20 und einer Laufschaufel 21 dargestellt, in dem sich eine im mittleren Bereich des Zwischenraums eine ausgemischte Strömung AS ausgebildet hat. An der Leitschaufel 20 bildet sich an der Wandung 5 für die Strömung eine Grenzschicht GS aus.

Der derzeitige Stand der Technik sieht Systeme vor, deren Eintrittskanal wandbündig abschließt und somit Fluid von der Metalloberfläche der die Strömung begrenzenden Wände absaugt. Hierdurch wird die Messung der Fluideigenschaften wie zum Beispiel der Fluidtemperatur durch hochgradig dreidimensionale Grenzschichteffekte beeinflusst. Es resultieren daher wesentliche Nachteile wie zum Beispiel eine Umfangsvariation mit hoher Amplitude. Dies ist insbesondere dann von Nachteil, wenn die Charakterisierung der Strömung durch Fluidabsaugungen an einigen wenigen auf den Umfang verteilten Positionen erfolgen soll. Die hohe Schwankungsbreite trägt dann dazu bei, dass ein hoher Sicherheitsfaktor vorgehalten werden muss.

Um eine Reduzierung dieser hohen Umfangsschwankung zu erreichen, erfolgt die Absaugung des Fluides aus der ausgemischten Strömung AS nicht wandbündig sondern mit einem einer Einsaugöffnung 1 an der Spitze eines Fluidkanals 2. Damit wird das Fluid aus dem Kernbereich der Strömung, der ausgemischten Strömung AS, anstatt aus der Grenzschicht GS der Strömung abgesaugt. Der Fluidkanal 2 - hier umgesetzt in Form eines kleinen Röhrchens - ragt in die Kernströmung (ausgemischte Strömung AS) herein und setzt sich definiert von der Metalloberfläche der fluidbegrenzenden Wandung 5 ab.

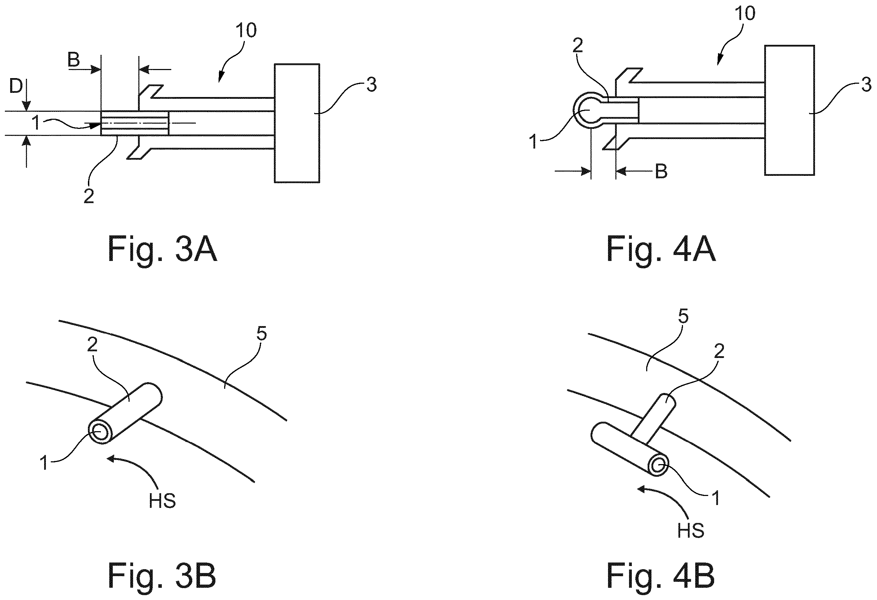

In der Fig. 3A, 3B ist die prinzipielle Ausführungsform gemäß Fig. 1 und 2 in einer Schnittansicht (Fig. 3A) und einer perspektivischen Ansicht (Fig. 3B) dargestellt, so dass auf die Beschreibung der Fig. 1 und 2 Bezug genommen werden kann.

In Fig. 3B wird dargestellt, dass der Fluidkanal 2 mit der Einsaugöffnung 1 in die Hauptströmung HS mit der ausgemischten Strömung AS hineinragt. Auch ist in der Fig. 3A die Beabstandung B von der Wandung 5 erkennbar.

Die Einsaugöffnung 1 ist hier parallel zur Hauptströmung HS ausgerichtet, d.h. unter einem Winkel von 0°.

In einer erfindungsgemäßen Ausführungsform, die in Fig. 4A, 4B dargestellt ist, zeigt die Einsaugöffnung 1 in die Richtung der Hauptströmungsrichtung HS, d.h. zwischen der Querschnittsfläche der A und der Hauptströmungsrichtung HS liegt ein Winkel von 90°. In alternativen Ausführungsformen kann der Winkel zwischen Querschnittsfläche der Einsaugöffnung 1 und der Hauptströmungsrichtung HS auch zwischen 0° und 90° liegen. In der Ausführungsform gemäß Fig. 4A, 4B ist der Fluidkanal 2 im Wesentlichen T-förmig ausgebildet, wobei Fluid durch die Einsaugöffnung 1 eintritt und am gegenüberliegenden Ende wieder austritt. In dem senkrecht dazuliegenden Teil des Fluidkanals wird das angesaugte Fluid zur Sensorvorrichtung 3 geführt.

Somit liegt hier, wie bei den anderen Ausführungsformen keine Aufstauung (wie z.B. bei einem Pitotrohr oder in einer Vorrichtung zur Totaltemperaturmessung) im Inneren der Messvorrichtung 10 vor. In Fig. 4A ist die Beabstandung B der Einsaugöffnung 1 von der Wandung 5 dargestellt.

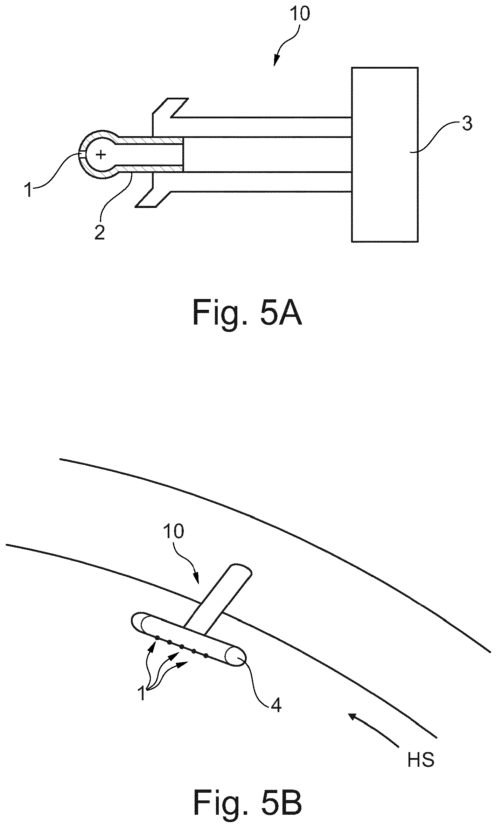

Die Ausführungsform gemäß der Fig. 5A, B verwendet nicht nur eine Einsaugöffnung 1, sondern eine Mehrzahl von Einsaugöffnungen 1, die am Umfang eines im Wesentlichen kreiszylindrischen Strömungskörpers angeordnet sind. Der Strömungskörper, der im Inneren einen Teil des Fluidkanals 2 aufweist, steht im Wesentlichen parallel zur Hauptströmungsrichtung HS. Das Ende 4, das in die Hauströmungsrichtung HS ist fluidmechanisch optimiert, d.h. es hat einen möglichst geringen Strömungswiderstand.

In der hier dargestellten Ausführungsform sind die Einsaugöffnungen 1 linear auf der Außenseite des kreiszylindrischen Strömungskörper angeordnet. In einer alternativen Ausgestaltung sind die Einsaugöffnungen 1 radial am Umfang angeordnet. Dabei können die Einsaugöffnungen gegeneinander um einen Winkelversatz angeordnet sein.

Die bisher dargestellten Fluidkanäle waren linear (z.B. Fig. 1) oder abschnittsweise linear (z.B. Fig. 3A, 3B) ausgebildet.

Grundsätzlich ist es auch möglich, dass die Fluidkanäle 2 mindestens teilweise gekrümmt ausbildet sind. Auch kann der Fluidkanal 2 außen eine andere Form aufweisen als der fluidführende Teil im Inneren.

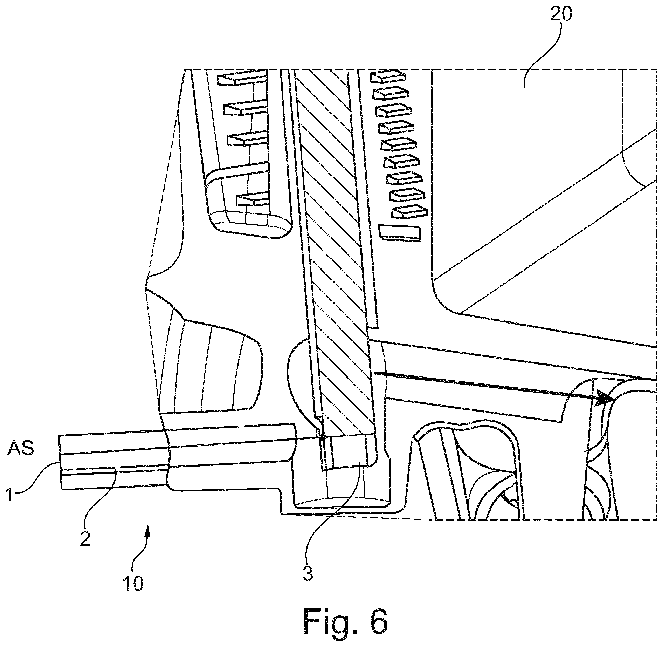

In Fig. 6 ist ein Ausschnitt aus dem Bereich einer Leitschaufel 20 dargestellt. Der Fluidkanal 2 ragt mit einer Einsaugöffnung 1 in die ausgemischt Strömung AS hinein. Die Temperatursensorvorrichtung 3 ist im Inneren angeordnet. Zwischen der ausgemischten Strömung AS und der Sensorvorrichtung liegt ein Druckverhältnis zwischen 1,2 und 1,5, insbesondere bei 1,4 an.

### Bezugszeichenliste

- 1: Einsaugöffnung der Messvorrichtung
- 2: Fluidkanal der Messvorrichtung
- 3: Sensorvorrichtung
- 4: Fluidmechanisch optimierte Spitze der Messvorrichtung
- 5: Wandung der Strömung

- 10: Messvorrichtung

- 20: Leitschaufel (Stator)
- 21: Laufschaufel (Rotor)

- AS: Ausgemischte Strömung
- GS: Grenzschichtströmung
- HS: Hauptströmungsrichtung
- B: Beabstandung der Einsaugöffnung von der Wandung
- F: eingesaugtes Fluid

## Patentansprüche

1. Turbomaschine, insbesondere ein Flugzeugtriebwerk, mit mindestens einer Messvorrichtung, die zwischen einer Leitschaufel (20) und einer Laufschaufel (21) der Turbomaschine angeordnet ist und, wobei die Messvorrichtung mindestens eine Einsaugöffnung (1) für Fluid aus einem Bereich einer ausgemischten, von Grenzschichteffekten unbeeinflussten Strömung (AS), aufweist wobei die mindestens eine Einsaugöffnung (1) von einer die Strömung begrenzenden Wandung (5) beabstandet ist und über einen Fluidkanal (2) eingesaugtes Fluid zu einer Sensorvorrichtung (3) führbar ist, wobei der Fluidkanal (2) so ausgebildet ist,
**dadurch gekennzeichnet, dass**
die mindestens eine Einsaugöffnung (1) parallel oder unter einem Winkel zu einer Hauptströmungsrichtung (HS) angeordnet ist
oder
dass der Fluidkanal (2) einen Abschnitt aufweist, der von dem Fluid einfach durchströmbar ist, wobei aus diesem Abschnitt Fluid zu der Sensorvorrichtung (3) abzweigbar ist, und
wobei der Fluidkanal (2) so ausgebildet ist, dass eingesaugtes Fluid aufstauungsfrei, ohne Messung eines Staudrucks im Inneren des Fluidkanals (2) zu einer Sensorvorrichtung (3) führbar ist, und
die Sensorvorrichtung (3) als Temperatursensor, als Sensor zur Messung der Konzentration mindestens einer Substanz, als Sensor zur Bestimmung der Partikelgröße einer partikelbehafteten Strömung, als Sensor zur Bestimmung der Luftfeuchte und / oder als Sensor zur Bestimmung des Ölanteils in einem Gas ausgebildet ist.

2. Turbomaschine nach Anspruch 1, **dadurch gekennzeichnet, dass** die mindestens eine Einsaugöffnung (1) an dem Fluidkanal (2) der Messvorrichtung (10) angeordnet ist, wobei der Fluidkanal (2) mindestens abschnittsweise gerade oder gekrümmt ausgebildet ist.

3. Turbomaschine nach Anspruch 1 oder 2, **dadurch gekennzeichnet, dass** der Querschnitt der mindestens einen Einsaugöffnung (1) rund oder elliptisch ist.

4. Turbomaschine nach mindestens einem der vorhergehenden Ansprüche, **dadurch gekennzeichnet, dass** mindestens eine Einsaugöffnung (1) am Umfang des Fluidkanals (2) angeordnet.

5. Turbomaschine nach Anspruch 4, **dadurch gekennzeichnet, dass** zwei Einsaugöffnungen (1) unter einem Abstand zwischen 90° und 120° am Umfang des Fluidkanals (2) angeordnet sind.

6. Turbomaschine nach mindestens einem der vorhergehenden Ansprüche, **dadurch gekennzeichnet, dass** das Verhältnis zwischen der freien Länge des Fluidkanals (2) in der Strömung und dem charakteristischen Durchmesser des Fluidkanals (2) zwischen 0,5 und 1,5 liegt, insbesondere bei 1.

7. Turbomaschine nach mindestens einem der vorhergehenden Ansprüche, **dadurch gekennzeichnet, dass** die freie Länge des Fluidkanals (2) in der Strömung 2 bis 10 mal der sich im Betrieb ausbildenden Grenzschichtdicke entspricht.

8. Turbomaschine nach mindestens einem der vorhergehenden Ansprüche, **dadurch gekennzeichnet, dass** die mindestens eine Einsaugöffnung (1) unter einem Winkel zwischen 70° und 110°, insbesondere zwischen 85° und 105°, ganz insbesondere unter insbesondere unter einem Winkel von 90° zur Hauptströmungsrichtung angeordnet ist.

9. Turbomaschine nach mindestens einem der vorhergehenden Ansprüche, **dadurch gekennzeichnet, dass** im Betrieb die Druckdifferenz zwischen der ausgemischten Strömung (AS) und einer Sensorvorrichtung (3) zwischen 1,2 und 1,5, insbesondere bei 1,4 liegt.

10. Turbomaschine nach mindestens einem der vorhergehenden Ansprüche, **dadurch gekennzeichnet, dass** die mindestens eine Strömungsmessvorrichtung (10) in einem Luftleitsystem und / oder einem Heißgaspfad des Kompressors und / oder der Turbine angeordnet ist.

11. Messverfahren für eine Strömung in einer Turbomaschine, insbesondere in einem Flugzeugtriebwerk, wobei
a) an mindestens einer Einsaugöffnung (1) Fluid aus einem Bereich einer ausgemischten von Grenzschichteffekten unbeeinflussten Strömung (AS) eingesaugt wird, wobei die mindestens eine Einsaugöffnung (1) von einer die Strömung begrenzenden Wandung (5) beabstandet ist und
b) anschließend über einen Fluidkanal (2) eingesaugtes Fluid zu einer Sensorvorrichtung (3) geführt wird, wobei der Fluidkanal (2) so ausgebildet ist, die mindestens eine Einsaugöffnung (1) parallel oder in einem Winkel zu einer Hauptströmungsrichtung (HS) angeordnet ist oder dass der Fluidkanal (2) einen Abschnitt aufweist, der von dem Fluid einfach durchströmt wird, wobei aus diesem Abschnitt Fluid zu der Sensorvorrichtung (3) abgezweigt wird,
**dadurch gekennzeichnet, dass**
die Sensorvorrichtung (3) als Temperatursensor, als Sensor zur Messung der Konzentration mindestens einer Substanz, als Sensor zur Bestimmung der Partikelgröße einer partikelbehafteten Strömung, als Sensor zur Bestimmung der Luftfeuchte und / oder als Sensor zur Bestimmung des Ölanteils in einem Gas ausgebildet ist und die Sensorvorrichtung (3) zwischen einer Leitschaufel (20) und einer Laufschaufel (21) angeordnet der Turbomaschine angeordnet ist und wobei der Fluidkanal (2) so ausgebildet ist, dass eingesaugtes Fluid aufstauungsfrei, ohne Messung eines Staudrucks im Inneren des Fluidkanals (2) zu einer Sensorvorrichtung (3) führbar ist.

## Claims

1. Turbo engine, in particular an aircraft engine, comprising at least one measuring device, which is arranged between a guide vane (20) and a rotor blade (21) of the turbo engine, wherein the measuring device comprises at least one suction intake opening (1) for fluid from a region of a mixed-out flow (AS) that is not influenced by boundary layer effects, wherein the at least one suction intake opening (1) is arranged at a distance from a wall (5) that delimits the flow and fluid suctioned in via a fluid channel (2) can be guided to a sensor device (3), wherein the fluid channel (2) is configured in this manner,
**characterised in that**
the at least one suction intake opening (1) is arranged in parallel with or at an angle to a main flow direction (HS)
or
**in that** the fluid channel (2) comprises a portion through which the fluid can flow easily, wherein fluid can be diverted from this portion to the sensor device (3), and wherein the fluid channel (2) is configured such that suctioned-in fluid can be guided to a sensor device (3) without backing up, without measuring a back-pressure in the interior of the fluid channel (2), and
the sensor device (3) is configured as a temperature sensor, as a sensor for measuring the concentration of at least one substance, as a sensor for determining the particle size of a flow containing particles, as a sensor for determining humidity, and/or as a sensor for determining the oil content in a gas.

2. Turbo engine according to claim 1, **characterised in that** the at least one suction intake opening (1) is arranged at the fluid channel (2) of the measuring device (10), wherein the fluid channel (2) is configured to be straight or curved at least in portions.

3. Turbo engine according to claim 1 or 2, **characterised in that** the cross section of the at least one suction intake opening (1) is round or elliptical.

4. Turbo engine according to at least one of the preceding claims, **characterised in that** at least one suction intake opening (1) is arranged on the circumference of the fluid channel (2).

5. Turbo engine according to claim 4, **characterised in that** two suction intake openings (1) are arranged at a distance of between 90° and 120° on the circumference of the fluid channel (2).

6. Turbo engine according to at least one of the preceding claims, **characterised in that** the ratio of the free length of the fluid channel (2) in the flow to the characteristic diameter of the fluid channel (2) is between 0.5 and 1.5, in particular 1.

7. Turbo engine according to at least one of the preceding claims, **characterised in that** the free length of the fluid channel (2) in the flow corresponds to twice to ten times the boundary layer thickness that forms during operation.

8. Turbo engine according to at least one of the preceding claims, **characterised in that** the at least one suction intake opening (1) is arranged at an angle of between 70° and 110°, in particular between 85° and 105°, most particularly at an angle of 90° in particular, to the main flow direction.

9. Turbo engine according to at least one of the preceding claims, **characterised in that** in operation the pressure difference between the mixed-out flow (AS) and a sensor device (3) is between 1.2 and 1.5, in particular 1.4.

10. Turbo engine according to at least one of the preceding claims, **characterised in that** the at least one flow-measuring device (10) is arranged in an air conduction system and/or a hot gas path of the compressor and/or the turbine.

11. Measuring method for a flow in a turbo engine, in particular in an aircraft engine, wherein
a) fluid is suctioned from a region of a mixed-out flow (AS) that is not influenced by boundary layer effects at at least one suction intake opening (1), wherein the at least one suction intake opening (1) is arranged at a distance from a wall (5) that delimits the flow and
b) fluid suctioned in via a fluid channel (2) then is guided to a sensor device (3), wherein the fluid channel (2) is configured in this manner, the at least one suction intake opening (1) is arranged in parallel with or at an angle to a main flow direction (HS), or that the fluid channel (2) comprises a portion through which the fluid can flow easily, wherein fluid is diverted from this portion to the sensor device (3),
**characterised in that**
the sensor device (3) is configured as a temperature sensor, as a sensor for measuring the concentration of at least one substance, as a sensor for determining the particle size of a flow containing particles, as a sensor for determining humidity, and/or as a sensor for determining the oil content in a gas, and the sensor device (3) is arranged between a guide vane (20) and a rotor blade (21) of the turbo engine, and wherein the fluid channel (2) is configured such that suctioned-in fluid can be guided to a sensor device (3) without backing up, without measuring a back-pressure in the interior of the fluid channel (2).

## Revendications

1. Turbomachine, en particulier moteur d'aéronef, avec au moins un dispositif de mesure qui est disposé entre une aube directrice (20) et une aube mobile (21) de la turbomachine, et dans laquelle le dispositif de mesure présente au moins un orifice d'admission par aspiration (1) pour fluide provenant d'une zone d'un écoulement (AS) mélangé non influencé par des effets de couche limite, dans laquelle l'au moins un orifice d'admission par aspiration (1) est tenu à distance d'une paroi (5) délimitant l'écoulement et du fluide admis par aspiration par l'intermédiaire d'un canal pour fluide (2) peut être guidé vers un dispositif de capteur (3), dans laquelle le canal pour fluide (2) est réalisé de telle sorte,
**caractérisée en ce que**
l'au moins un orifice d'admission par aspiration (1) est disposé de manière parallèle ou selon un angle par rapport à un sens d'écoulement principale (HS)
ou
que le canal pour fluide (2) présente une section, qui peut être traversée aisément par le fluide, dans laquelle du fluide peut être dévié depuis cette section vers le dispositif de capteur (3), et
dans laquelle le canal pour fluide (2) est réalisé de telle sorte que du fluide admis par aspiration peut être guidé vers un dispositif de capteur (3) sans accumulation, sans mesure d'une pression dynamique à l'intérieur du canal pour fluide (2), et
le dispositif de capteur (3) est réalisé en tant que capteur de température, en tant que capteur pour la mesure de la concentration d'au moins une substance, en tant que capteur pour la détermination de la taille de particule d'un écoulement chargé en particules, en tant que capteur pour la détermination de l'humidité de l'air et/ou en tant que capteur pour la détermination de la proportion d'huile dans un gaz.

2. Turbomachine selon la revendication 1, **caractérisée en ce que** l'au moins un orifice d'admission par aspiration (1) est disposé sur le canal pour fluide (2) du dispositif de mesure (10), dans laquelle le canal pour fluide (2) est réalisé au moins par endroits de manière droite ou incurvée.

3. Turbomachine selon la revendication 1 ou 2, **caractérisée en ce que** la section transversale de l'au moins un orifice d'admission par aspiration (1) est rond ou elliptique.

4. Turbomachine selon au moins l'une quelconque des revendications précédentes, **caractérisée en ce qu'**au moins un orifice d'admission par aspiration (1) est disposé sur la périphérie du canal pour fluide (2).

5. Turbomachine selon la revendication 4, **caractérisée en ce que** deux orifices d'admission par aspiration (1) sont disposés à une distance entre 90° et 120° sur la périphérie du canal pour fluide (2).

6. Turbomachine selon au moins l'une quelconque des revendications précédentes, **caractérisée en ce que** le rapport entre la longueur libre du canal pour fluide (2) dans l'écoulement et le diamètre caractéristique du canal pour fluide (2) se situe entre 0,5 et 1,5, en particulier est de l'ordre de 1.

7. Turbomachine selon au moins l'une quelconque des revendications précédentes, **caractérisée en ce que** la longueur libre du canal pour fluide (2) dans l'écoulement correspond à 2 à 10 fois l'épaisseur de couche limite se formant lors du fonctionnement.

8. Turbomachine selon au moins l'une quelconque des revendications précédentes, **caractérisée en ce que** l'au moins un orifice d'admission par aspiration (1) est disposé selon un angle entre 70° et 110°, en particulier entre 85° et 105°, tout particulièrement entre autres selon un angle de 90° par rapport au sens d'écoulement principale.

9. Turbomachine selon au moins l'une quelconque des revendications précédentes, **caractérisée en ce que** lors du fonctionnement la différence de pression entre l'écoulement mélangé (AS) et un dispositif de capteur (3) se situe entre 1,2 et 1,5, en particulier est de l'ordre de 1,4.

10. Turbomachine selon au moins l'une quelconque des revendications précédentes, **caractérisée en ce que** l'au moins un dispositif de mesure d'écoulement (10) est disposé dans un système de guidage d'air et/ou un trajet de gaz très chaud du compresseur et/ou de la turbine.

11. Procédé de mesure pour un écoulement dans une turbomachine, en particulier dans un moteur pour aéronef, dans lequel
a) du fluide provenant d'une zone d'un écoulement (AS) mélangé, non influencé par des effets de couche limite est admis par aspiration sur au moins un orifice d'admission par aspiration (1), dans lequel l'au moins un orifice d'admission par aspiration (1) est tenu à distance d'une paroi (5) délimitant l'écoulement, et
b) puis du fluide admis par aspiration est guidé vers un dispositif de capteur (3) par l'intermédiaire d'un canal pour fluide (2), dans lequel le canal pour fluide (2) est réalisé de telle sorte que l'au moins un orifice d'admission par écoulement (1) est disposé de manière parallèle ou selon un angle par rapport à un sens d'écoulement principale (HS), ou que le canal pour fluide (2) présente une section, qui est traversée aisément par le fluide, dans lequel du fluide est dévié vers le dispositif de capteur (3) depuis cette section,
**caractérisé en ce que**
le dispositif de capteur (3) est réalisé en tant que capteur de température, en tant que capteur pour la mesure de la concentration d'au moins une substance, en tant que capteur pour la détermination de la taille de particule d'un écoulement chargé en particules, en tant que capteur pour la détermination de l'humidité de l'air et/ou en tant que capteur pour la détermination de la proportion d'huile dans un gaz, et le dispositif de capteur (3) est disposé entre une aube directrice (20) et une aube mobile (21) de la turbomachine, et dans lequel le canal pour fluide (2) est réalisé de telle sorte que du fluide admis par aspiration peut être guidé vers un dispositif de capteur (3) sans accumulation, sans mesure d'une pression dynamique à l'intérieur du canal pour fluide (2).
